# EUROPEAN PATENT APPLICATION

(11) **EP 4 296 237 A1**
(43) Date of publication of application: **27.12.2023**
(21) Application number: 22776134.3
(22) Date of filing: 25.03.2022
(51) Int. Cl.: C01G 53/00, H01M 4/525, H01M 4/505, H01M 4/36

(54) **METHOD FOR MANUFACTURING CATHODE ACTIVE MATERIAL**

(30) Priority: 25.03.2021 KR 20210038784
(71) Applicant: LG CHEM, LTD., Yeongdeungpo-gu, Seoul 07336 (KR)
(72) Inventor: MOK, Duck Gyun, Daejeon 34122 (KR); LEE, Hyuck, Daejeon 34122 (KR); KWAK, No Woo, Daejeon 34122 (KR); SON, Min Hee, Daejeon 34122 (KR)
(74) Representative: Hoffmann Eitle
(86) International application number: PCT/KR2022/004182
(87) International publication number: WO 2022/203434

(57) **Abstract**

The present invention is an invention capable of reducing the amount of a water-washing solution used, minimizing surface deterioration of a positive electrode active material generated in a water-washing process, and effectively controlling residual lithium, and relates to a method of preparing a positive electrode active material, the method including: (A) preparing a lithium transition metal oxide; (B) mixing the lithium transition metal oxide with a first water-washing solution to perform a first water-washing and then a first filtering on the lithium transition metal oxide; and (C) using a filtering device capable of concurrently water-washing and filtering the lithium transition metal oxide subjected to step (B) to concurrently perform a second water-washing and a second filtering, with a second water-washing solution, wherein the second water-washing solution is in an amount of 10 parts by weight to 50 parts by weight with respect to 100 parts by weight of the first water-washing solution.

## Description

### TECHNICAL FIELD

### Cross-reference to Related Applications

This application claims the benefit of Korean Patent Application No. 10-2021-0038784, filed on March 25, 2021, in the Korean Intellectual Property Office, the disclosure of which is incorporated herein in its entirety by reference.

### Technical Field

The present invention relates to a method of preparing a positive electrode active material.

### BACKGROUND ART

Nickel-based positive electrode active materials are prepared by mixing nickel-based positive electrode active material precursors with lithium-containing raw materials and then firing the mixture, and in the process, unreacted lithium-containing raw materials and by-products, for example, LiOH, Li₂CO₃, and the like happen to remain on surfaces of the positive electrode active materials. In particular, nickel-based positive electrode active materials containing a large amount of nickel cause a large amount of residual lithium. These by-products may react with electrolytes to cause deterioration in long-term performance of batteries (e.g., reduced long-term lifespan, increased resistance, and the like) and stability issues (e.g., gas generation). In addition, gelation may be caused in the process of preparing electrode slurries.

To make sure this doesn't happen, the process of preparing positive electrode active materials has been typically in a way that positive electrode active material precursors and lithium-containing raw materials are mixed and fired to obtain positive electrode active materials and then residual lithium is controlled through a water-washing process of washing the positive electrode active materials, using a water-washing solution (e.g. deionized water, distilled water, or the like). Meanwhile, there is a way of using a large amount of a water-washing solution in the water-washing process to effectively control residual lithium, but the using of a large amount of a water-washing solution may cause issues in processes, and surface deterioration of positive electrode active materials may cause degradation of battery performance.

In this regard, there is a need for a way of preparing positive electrode active materials capable of both effectively controlling residual lithium and preventing deterioration of the positive electrode active materials.

### DISCLOSURE OF THE INVENTION

### TECHNICAL PROBLEM

The present invention has been made to solve the above-described problems, and is to provide a method of preparing a positive electrode active material capable of minimizing surface deterioration of a positive electrode active material, which may be caused in a water-washing process in the preparation of the positive electrode active material and effectively controlling residual lithium, thereby minimizing deterioration in battery performance.

### TECHNICAL SOLUTION

In order to solve the above-described tasks, the present invention provides a method of preparing a positive electrode active material.
(1) The present invention provides a method of preparing a positive electrode active material, the method including: (A) preparing a lithium transition metal oxide; (B) mixing the lithium transition metal oxide with a first water-washing solution to perform a first water-washing and then a first filtering on the lithium transition metal oxide; and (C) using a filtering device capable of concurrently water-washing and filtering the lithium transition metal oxide subjected to step (B) to concurrently perform a second water-washing and a second filtering, with a second water-washing solution, wherein the second water-washing solution is in an amount of 10 parts by weight to 50 parts by weight with respect to 100 parts by weight of the first water-washing solution.
(2) The present invention provides the method of (1) above, wherein the lithium transition metal oxide contains nickel in an amount of 70 mol% or greater among all metals other than lithium.
(3) The present invention provides the method of (1) or (2) above, wherein the lithium transition metal oxide has a composition represented by Formula 1 below.

   [Formula 1] Li₁₊ₐNiₓ₁Co_{y1}M1_{z1}M2_{w1}O₂

   In Formula 1 above,
   0≤a≤0.3, 0.7≤x1<1.0, 0<y1≤0.3, 0<z1≤0.3, 0≤w1≤0.2, and x1+y1+z1+w1=1,
   M1 is at least one selected from Mn and Al, and
   M2 is at least one selected from Zr, B, W, Mo, Cr, Nb, Mg, Hf, Ta, La, Ti, Sr, Ba, Ce, F, P, S, and Y.
(4) The present invention provides the method of any one among (1) to (3) above, wherein the first water-washing solution is in an amount of 50 parts by weight to 100 parts by weight with respect to 100 parts by weight of the lithium transition metal oxide.
(5) The present invention provides the method of any one among (1) to (4) above, wherein the second water-washing solution is in an amount of 5 parts by weight to 50 parts by weight with respect to 100 parts by weight of the lithium transition metal oxide.
(6) The present invention provides the method of any one among (1) to (5) above, wherein the sum of the amount of the first water-washing solution and the amount of the second water-washing solution is 55 parts by weight to 150 parts by weight with respect to 100 parts by weight of the lithium transition metal oxide.
(7) The present invention provides the method of any one among (1) to (6) above, wherein the first water-washing is performed for 5 to 30 minutes.
(8) The present invention provides the method of any one among (1) to (7) above, wherein the first water-washing is performed at 5 °C to 30 °C.
(9) The present invention provides the method of any one among (1) to (8) above, wherein the second water-washing is performed for 5 to 30 minutes.
(10) The present invention provides the method of any one among (1) to (9) above, wherein the second water-washing is performed at 5 °C to 30 °C.
(11) The present invention provides the method of any one among (1) to (10) above, wherein (D) drying the lithium transition metal oxide subjected to step (C), and then mixing the dried lithium transition metal oxide with a raw material containing a coating element and heat-treating the mixture to form a coating layer.

### ADVANTAGEOUS EFFECTS

The present invention may reduce the amount of a water-washing solution used, minimize surface deterioration of a positive electrode active material generated in a water-washing process, and effectively control residual lithium, by including steps (B) and (C). Therefore, batteries using a positive electrode active material prepared through a method according to the present invention may have excellent performance, especially electrochemical performance and thermal stability.

### BRIEF DESCRIPTION OF THE DRAWINGS

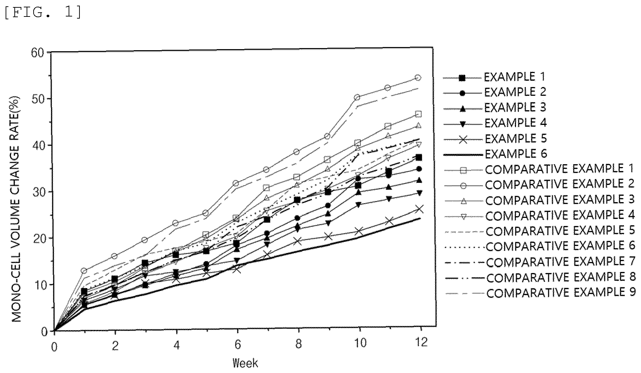

FIG. 1 is a graph showing volume change rates of a mono-cells at high temperature, which are prepared using positive electrode active materials prepared in Examples and Comparative Examples.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

Hereinafter, the present invention will be described in more detail.

### METHOD OF PREPARING POSITIVE ELECTRODE ACTIVE MATERIAL

The present inventors have found out ways of reducing the amount of a water-washing solution used in a water-washing process in preparation of a positive electrode active material, minimizing surface deterioration of the positive electrode active material generated in the water-washing process, and effectively removing residual lithium, and have thus completed the present invention.

The method of preparing a positive electrode active material according to the present invention includes: (A) preparing a lithium transition metal oxide; (B) mixing the lithium transition metal oxide with a first water-washing solution to perform a first water-washing and then a first filtering on the lithium transition metal oxide; and (C) using a filtering device capable of concurrently water-washing and filtering the lithium transition metal oxide subjected to step (B) to concurrently perform a second water-washing and a second filtering, with a second water-washing solution. In this case, the second water-washing solution is in an amount of 10 parts by weight to 50 parts by weight with respect to 100 parts by weight of the first water-washing solution.

The method of preparing a positive electrode active material according to the present invention may further include (D) drying the lithium transition metal oxide subjected to step (C), and then mixing the dried lithium transition metal oxide with a raw material containing a coating element and heat-treating the mixture to form a coating layer.

Hereinafter, each step of the method of preparing a positive electrode active material will be described in detail.

### Step (A)

The method of preparing a positive electrode active material according to the present invention includes preparing a lithium transition metal oxide.

The preparing of the lithium transition metal oxide may include mixing a positive electrode active material precursor with a lithium-containing raw material and firing the mixture to prepare a lithium transition metal oxide.

The positive electrode active material precursor may have, for example, a composition represented by Formula A or Formula B below.

[Formula A] [NiₓCo_{y}M1_{z}M2_{w}](OH)₂

[Formula B] [NiₓCo_{y}M1_{z}M2_{w}]O·OH

In Formulas A and B above, M1 may be at least one selected from Mn and Al, and M2 may be at least one selected from Zr, B, W, Mo, Cr, Nb, Mg, Hf, Ta, La, Ti, Sr, Ba, Ce, F, P, S, and Y.

x indicates an atomic fraction of nickel among metal elements in the precursor, and may be 0.7≤x<1, 0.7≤x≤0.98, or 0.7≤x≤0.95.

y indicates an atomic fraction of cobalt among metal elements in the precursor, and may be 0<y≤0.3 or 0.01≤y≤0.3.

z indicates an element fraction of the M1 element among metal elements in the precursor, and may be 0<z≤0.3 or 0.01≤z≤0.3.

w indicates an element fraction of the M2 element among metal elements in the precursor, and may be 0≤w≤0.2, 0≤w≤0.1, 0≤w≤-0.05, or 0≤w≤0.02.

The lithium-containing raw material may be, for example, at least one selected from the group consisting of lithium carbonate (Li₂CO₃), lithium hydroxide (LiOH), LiNO₃, CH₃COOLi, and Li₂(COO)₂, preferably lithium carbonate (Li₂CO₃), lithium hydroxide (LiOH), or a combination thereof.

In the preparation of a positive electrode active material, the positive electrode active material precursor and the lithium-containing raw material may be mixed in a molar ratio of 1:1 to 1:1.625, or 1:1 to 1:1.15. When the lithium-containing raw material is mixed in an amount less than the above range, the positive electrode active material to be prepared may have reduced capacity, and when the lithium-containing raw material is mixed in an amount greater than the above range, unreacted Li remains as a by-product, and capacity reduction and separation of positive electrode active material particles after firing (causing impregnation of a positive electrode active material) may be caused.

The firing may be performed at 700 °C to 1000 °C. When the firing temperature is less than 700 °C, the raw material remains in the particles due to insufficient reaction, which may reduce stability of batteries at high temperature, and decrease volume density and crystallinity, thereby reducing structural stability. On the other hand, when the firing temperature is greater than 1000 °C, non-uniform growth of particles may take place, and disintegration of particles hardly happens, resulting in reduced capacity. Meanwhile, in consideration of particle size control, capacity, and stability of the prepared positive electrode active material, and reduction of lithium-containing by-products, the firing temperature may be more preferably 700 °C to 980 °C.

The firing may be performed for 5 to 35 hours. When the firing time is less than 5 hours, the reaction time may be too short to obtain a high crystalline positive electrode active material, and when the firing time is greater than 35 hours, the particle size may become excessively large, and production efficiency may be reduced.

According to the present invention, the lithium transition metal oxide may contain nickel in an amount of 70 mol% or greater among all metals other than lithium. Specifically, the lithium transition metal oxide may have a composition represented by Formula 1 below.

[Formula 1] Li₁₊ₐNiₓ₁Co_{y1}M1_{z1}M2_{w1}O₂

In Formula 1 above, 0≤a≤0.3, 0.7≤x1<1.0, 0<y1≤0.3, 0<z1≤0.3, 0≤w1≤0.2, or x1+y1+z1+w1=1, M1 may be at least one selected from Mn and Al, and M2 may be at least one selected from Zr, B, W, Mo, Cr, Nb, Mg, Hf, Ta, La, Ti, Sr, Ba, Ce, F, P, S, and Y.

x1 indicates an atomic fraction of nickel among metal elements other than lithium in the lithium transition metal oxide, and may be 0.7≤x1<1, 0.7≤x1≤0.98, or 0.7≤x1≤0.95.

y1 indicates an atomic fraction of cobalt among metal elements other than lithium in the lithium transition metal oxide, and may be 0<y1≤0.3 or 0.01≤y1≤0.3.

z1 indicates an element fraction of the M1 element among metal elements other than lithium in the lithium transition metal oxide, and may be 0<z1≤0.3 or 0.01≤z1≤0.3.

w1 indicates an element fraction of the M2 element among metal elements other than lithium in the lithium transition metal oxide, and may be 0≤w1≤0.2, 0≤w1≤0.1, 0≤w1≤0.05 or 0≤w1≤0.02.

### Step (B) and Step (C)

The method of preparing a positive electrode active material according to the present invention includes: mixing the lithium transition metal oxide with a first water-washing solution to perform a first water-washing and then a first filtering on the lithium transition metal oxide (step (B)); and using a filtering device capable of concurrently water-washing and filtering the lithium transition metal oxide subjected to step (B) to concurrently perform a second water-washing and a second filtering, with a second water-washing solution (step (C)).

When the second water-washing and the second filtering are concurrently performed using the second water-washing solution through a filtering device capable of concurrently water-washing and filtering the lithium transition metal oxide subjected to step (B), ions remaining on a surface of the positive electrode active material are easily removed, which is beneficial in regard to preventing surface deterioration of the positive electrode active material and reducing residual lithium, compared to step (B) of mixing the lithium transition metal oxide with a water-washing solution to water-wash and then filter the mixture.

In addition, when steps (B) and (C) are sequentially performed, unnecessary ions on the surface of the positive electrode active material may be quickly removed compared to the case of performing step (C) first and then performing step (B) .

The filtering device capable of concurrently water-washing and filtering may be a funnel filter or a filter press, but is not limited thereto.

In this case, the second water-washing solution is in an amount of 10 parts by weight to 50 parts by weight with respect to 100 parts by weight of the first water-washing solution. Meanwhile, when performing step (C) after collecting the lithium transition metal oxides subjected to step (B), the amount of the second water-washing solution is determined with respect to the total amount of the first water-washing solution used in step (B). That is, when performing step (C) after collecting the lithium transition metal oxides subjected to step (B), the amount of the second water-washing solution is 10 parts by weight to 50 parts by weight with respect to 100 parts by weight of the total amount of the first water-washing solution used in step (B).

When the amount of the second water-washing solution satisfies the above range, surface deterioration of the positive electrode active material, which is caused in the water-washing process may be minimized, and residual ions on the surface of the positive electrode active material may be effectively controlled. Therefore, batteries using the positive electrode active material prepared through the method according to the present invention may have excellent performance, especially electrochemical performance and thermal stability. Meanwhile, when the amount of the second water-washing solution is less than 10 parts by weight with respect to 100 parts by weight of the first water-washing solution, ions on the surface of the positive electrode active material may not be sufficiently removed, and when the amount of the second water-washing solution is greater than 50 parts by weight, ions on the surface and even inside of the positive electrode active material may be removed.

The present invention includes steps (B) and (C) as water-washing processes and may thus reduce the amount of a water-washing solution used, minimize surface deterioration of a positive electrode active material, which is caused in the water-washing processes, and effectively control residual lithium. Accordingly, batteries using the positive electrode active material prepared through the method according to the present invention may have excellent performance.

According to the present invention, even in the case of using a lithium transition metal oxide containing nickel in a high amount as shown in Formula 1, when the water-washing process as in the present invention is performed, surface deterioration of the positive electrode active material, which is caused in the water-washing process may be minimized, and residual ions may be effectively controlled, and a positive electrode active material having excellent performance may thus be provided.

According to the present invention, the first water-washing solution may be in an amount of 50 parts by weight to 100 parts by weight with respect to 100 parts by weight of the lithium transition metal oxide. When the amount of the first water-washing solution is less than 50 parts by weight with respect to 100 parts by weight of the lithium transition metal oxide, unnecessary ions on the surface of the positive electrode active material may not be sufficiently removed, and when the amount of the first water-washing solution is greater than 100 parts by weight, lithium inside the positive electrode active material may escape due to the excessive water-washing solution.

According to the present invention, the second water-washing solution may be 5 parts by weight to 50 parts by weight, specifically 10 parts by weight to 30 parts by weight, with respect to 100 parts by weight of the lithium transition metal oxide. In addition, the sum of the amount of the first water-washing solution and the amount of the second water-washing solution may be 55 parts by weight to 150 parts by weight, specifically 60 parts by weight to 130 parts by weight, more specifically 60 parts by weight to 125 parts by weight, with respect to 100 parts by weight of the lithium transition metal oxide. In this case, residual ions on the surface of the positive electrode active material may be effectively removed and surface deterioration of the positive electrode active material, which is caused in the water-washing process may also be minimized.

According to the present invention, solvents of the first water-washing solution and the second water-washing solution may each independently be at least one selected from deionized water, distilled water, ethanol, and industrial water. Specifically, the solvents of the first water-washing solution and the second water-washing solution may be deionized water and/or distilled water. In this case, lithium may be easily dissolved to remove the residual lithium present on the surface.

According to the present invention, the first water-washing may be performed for 5 minutes to 30 minutes, specifically 5 minutes to 20 minutes, and more specifically 5 minutes to 15 minutes. When the first water-washing time is within the above range, the residual lithium on the surface is solely removed, and dissolution of the lithium inserted inside may be suppressed to the maximum.

According to the present invention, the first water-washing may be performed at 5 °C to 30 °C, specifically 5 °C to 25 °C. When the first water-washing is performed at a temperature within the above range, there is an advantage in controlling lithium carbonate that is well dissolved in a water-washing solution at low temperature.

According to the present invention, the second water-washing may be performed for 5 minutes to 30 minutes, specifically 5 minutes to 20 minutes, and more specifically 5 minutes to 15 minutes. In addition, the second water-washing may be performed at 5 °C to 30 °C, specifically 5 °C to 25 °C. When the time and temperature of the second water-washing process are within the above ranges, there is an advantage in controlling ions present on the surface of the positive electrode active material.

### Step (D)

The method of preparing a positive electrode active material according to the present invention may further include drying the lithium transition metal oxide subjected to step (C), and then mixing the dried lithium transition metal oxide with a raw material containing a coating element and heat-treating the mixture to form a coating layer. Accordingly, a positive electrode active material having a coating layer formed on a surface of the lithium transition metal oxide may be prepared.

The drying process is a process designed to remove moisture from the positive electrode active material containing moisture through the water-washing process, and may be dried for 12 hours or more at 100 °C to 150 °C.

Metal elements included in the raw material containing a coating element may be Zr, B, W, Mo, Cr, Nb, Mg, Hf, Ta, La, Ti, Sr, Ba, Ce, F, P, S, and Y. The coating element-containing raw material may be acetate, nitrate, sulfate, halide, sulfide, hydroxide, oxide, or oxyhydroxide, which contains the metal elements. For example, when the metal element is B, boric acid (H₃BO₃) or the like may be used.

The coating element-containing raw material may be included in an amount of 200 ppm to 2000 ppm by weight with respect to the dried lithium transition metal oxide. When the amount of the coating element-containing raw material is within the above range, batteries may have increased capacity, and the generated coating layer suppresses a direct reaction between an electrolyte and the lithium transition metal oxide, and accordingly batteries may have an improvement in long-term performance characteristics.

The heat-treatment may be performed at 200 °C to 400 °C. When the heat-treatment temperature is within the above range, the coating layer may be formed while the structural stability of the transition metal oxide is maintained. The heat-treatment may be performed for 1 hour to 10 hours. When the heat-treatment time is within the above range, an appropriate coating layer may be formed and production efficiency may be increased.

### Positive electrode

In addition, the present invention may provide a positive electrode for a lithium secondary battery including a positive electrode active material prepared through the above-described method.

Specifically, the positive electrode includes a positive electrode collector and a positive electrode active material layer placed on at least one surface of the positive electrode collector and including the positive electrode active material.

The positive electrode collector is not particularly limited as long as it has conductivity without causing a chemical change in a battery. For example, stainless steel, aluminum, nickel, titanium, baked carbon, or aluminum or stainless steel that is surface-treated with one of carbon, nickel, titanium, silver, and the like may be used. In addition, the positive electrode collector may typically have a thickness of 3 um to 500 µm, and fine irregularities may be formed on a surface of the collector to improve the adhesion of a positive electrode active material. For example, the positive electrode collector may be used in various forms such as a film, a sheet, a foil, a net, a porous body, a foam body, and a non-woven fabric body.

The positive electrode active material layer may include a conductive material and a binder, together with a positive electrode active material.

In this case, the positive electrode active material may be included in an amount of 80 wt% to 99 wt%, more specifically 85 wt% to 98 wt% with respect to the total weight of the positive electrode active material layer. When included in the above amount range, the positive electrode active material may exhibit excellent capacity properties.

In this case, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 wt% to 30 wt% with respect to the total weight of the positive electrode active material layer.

The binder serves to improve the bonding between positive electrode active material particles and the adhesion between the positive electrode active material and the collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt% with respect to the total weight of the positive electrode active material layer.

The positive electrode may be prepared according to a typical method of preparing a positive electrode, except that the positive electrode active material described above is used. Specifically, a positive electrode material mixture, which is prepared by dissolving or dispersing the positive electrode active material and selectively, a binder and a conductive material in a solvent, is coated on the positive electrode collector, and the positive electrode may then be prepared by drying and roll-pressing the coated positive electrode collector. In this case, types and amounts of the positive electrode active material, the binder, and the conductive material are as described above. In addition, in another method, the positive electrode may be prepared by casting the positive electrode material mixture on a separate support and then laminating a film separated from the support on the positive electrode collector.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The amount of the solvent to be used is sufficient if the solvent may dissolve or disperse the positive electrode active material, the conductive material, and the binder in consideration of the applying thickness of a slurry and preparation yield, and thereafter, have a viscosity which may exhibit excellent thickness uniformity during application for the preparation of a positive electrode.

### Lithium Secondary Battery

In addition, the present invention may manufacture an electrochemical device including the positive electrode. The electrochemical device may be specifically a battery, a capacitor, or the like, and more specifically, may be a lithium secondary battery.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode collector and a negative electrode active material layer positioned on the negative electrode collector.

The negative electrode collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode collector may typically have a thickness of 3 um to 500 µm, and as in the case of the positive electrode collector, fine irregularities may be formed on the surface of the negative electrode collector to improve the adhesion of a negative electrode active material. For example, the negative electrode collector may be used in various forms such as a film, a sheet, a foil, a net, a porous body, a foam body, and a non-woven fabric body.

The negative electrode active material layer selectively includes a binder and a conductive material in addition to a negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β}(0<β<2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. Furthermore, low crystalline carbon, high crystalline carbon and the like may all be used as a carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% with respect to the total weight of a negative electrode active material layer.

The binder is a component for assisting in bonding between a conductive material, an active material, and a collector, and is typically added in an amount of 0.1 wt% to 10 wt% with respect to the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of a negative electrode active material, and may be added in an amount of 10 wt% or less, preferably 5 wt% or less, with respect to the total weight of a negative electrode active material layer. Such conductive material is not particularly limited as long as it has conductivity without causing chemical changes in the battery, and may employ, for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like, may be used.

The negative electrode active material layer may be prepared by applying a negative electrode mixture material, which is prepared by dissolving or dispersing a negative electrode active material and selectively a binder and a conductive material in a solvent, on a negative electrode collector and drying the coated negative electrode collector, or may be prepared by casting the negative electrode material mixture on a separate support and then laminating a film separated from the support on the negative electrode collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer component may be used to secure heat resistance or mechanical strength, and the separator having a single layer or multilayer structure may be selectively used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the performance of the electrolyte may be excellent when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, as the lithium salt, LLiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂ or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

The lithium secondary battery including the positive electrode active material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

### MODE FOR CARRYING OUT THE INVENTION

Hereinafter, embodiments of the present invention will be described in detail to make sure that those skilled in the art easily implement the present invention. However, the present invention may be modified into other various forms, and is not limited to the embodiments described herein.

### Preparation Example

A precursor having a composition represented by Ni_{0.86}Co_{0.05}Mn_{0.07}Al_{0.02}(OH)₂ and LiOH were mixed in a molar ratio of 1:1.05, and then the mixture was fired at 780 °C in an oxygen atmosphere for 10 hours to prepare a lithium transition metal oxide having a composition represented by Li[Ni_{0.86}Co_{0.05}Mn_{0.07}Al_{0.02}]O₂.

### Examples and Comparative Examples

### Example 1

50 parts by weight of deionized water (first water-washing solution) was mixed with respect to 100 parts by weight of the lithium transition metal oxide prepared in Preparation Example, and the mixture was subjected to a first water-washing at 25 °C for 10 minutes, and then subjected to a first filtering for 5 minutes using a filter press. Thereafter, with respect to 100 parts by weight of the lithium transition metal oxide, 10 parts by weight of deionized water (second water-washing solution) was permeated for 5 minutes at 25 °C using a filter press, subjected to a second water-washing and a second filtering, and dried in a vacuum oven at 130 °C for 12 hours or more to prepare a positive electrode active material.

### Examples 2 to 4

Positive electrode active materials were prepared in the same manner as in Example 1, except that the amount of the first water-washing solution and the amount of second water-washing solution in Example 1 were each controlled as shown in Table 1 below.

### Examples 5 and 6

Positive electrode active materials were prepared in the same manner as in Example 1, except that the amount of the first water-washing solution and the amount of second water-washing solution in Example 1 were each controlled as shown in Table 1 below, and lithium transition metal oxide was dried in a vacuum oven at 130 °C for 12 hours or more, and the dried lithium transition metal oxide was mixed with H₃BO₃ powder in an amount of 1000 ppm by weight, and the mixture was heat-treated at 300 °C for 5 hours to prepare a positive electrode active material having a coating layer formed on a surface of the lithium transition metal oxide.

### Comparative Example 1

60 parts by weight of deionized water was mixed with respect to 100 parts by weight of the lithium transition metal oxide prepared in Preparation Example, and the mixture was water-washed at 25 °C for 5 minutes, filtered for 5 minutes using a filter press, and dried in a vacuum oven at 130 °C for 12 hours to prepare a positive electrode active material.

### Comparative Example 2

50 parts by weight of deionized water was mixed with respect to 100 parts by weight of the lithium transition metal oxide prepared in Preparation Example, and the mixture was water-washed at 25 °C for 10 minutes, and then filtered for 5 minutes using a filter press. Thereafter, 50 parts by weight of deionized water was mixed with respect to 100 parts by weight of the lithium transition metal oxide, and the mixture was water-washed at 25 °C for 10 minutes, filtered for 10 minutes using a filter press, and dried in a vacuum oven at 130 °C for 12 hours to prepare a positive electrode active material.

### Comparative Examples 3 to 5

Positive electrode active materials were prepared in the same manner as in Comparative Example 1, except that the amounts of deionized water in Comparative Example 1 were controlled to 75 parts by weight, 110 parts by weight, and 125 parts by weight.

### Comparative Example 6

110 parts by weight of deionized water was mixed with respect to 100 parts by weight of the lithium transition metal oxide prepared in Preparation Example, and the mixture was water-washed at 25 °C for 5 minutes, filtered for 5 minutes using a filter press, and dried in a vacuum oven at 130 °C for 12 hours. The dried lithium transition metal oxide was mixed with H₃BO₃ powder in an amount of 1000 ppm by weight, and the mixture was heat-treated at 300 °C for 5 hours to prepare a positive electrode active material having a coating layer formed on a surface of the lithium transition metal oxide.

### Comparative Example 7

A positive electrode active material was prepared in the same manner as in Comparative Example 1, except that the amount of deionized water in Comparative Example 6 was controlled to 125 parts by weight.

### Comparative Examples 8 and 9

Positive electrode active materials were prepared in the same manner as in Example 1, except that the amount of the first water-washing solution and the amount of second water-washing solution in Example 1 were each controlled as shown in Table 1 below.

**[Table 1]**

| | Amount of first water-washing solution with respect to 100 parts by weight of positive electrode active material (Parts by weight) | Amount of second water-washing solution with respect to 100 parts by weight of positive electrode active material (Parts by weight) | Amount of total water-washing solution with respect to 100 parts by weight of positive electrode active material (Parts by weight) |
|---|---|---|---|
| Example 1 | 50 | 10 | 60 |
| Example 2 | 50 | 25 | 75 |
| Example 3 | 100 | 10 | 110 |
| Example 4 | 100 | 25 | 125 |
| Example 5 | 100 | 10 | 110 |
| Example 6 | 100 | 25 | 125 |
| Comparative Example 1 | - (Step 1 washing) | | 60 |
| Comparative Example 3 | - (Step 1 washing) | | 75 |
| Comparative Example 4 | - (Step 1 washing) | | 110 |
| Comparative Example 5 | - (Step 1 washing) | | 125 |
| Comparative Example 6 | - (Step 1 washing) | | 110 |
| Comparative Example 7 | - (Step 1 washing) | | 125 |
| Comparative Example 8 | 100 | 5 | 105 |
| Comparative Example 9 | 100 | 51 | 151 |

### Experimental Examples

### Experimental Example 1: Evaluation of residual lithium and BET specific surface area

5 g of each of the positive electrode active materials prepared in Examples and Comparative Examples was put in deionized water (100 ml) and stirred for 5 minutes, then only the solution was filtered, HCl (0.1 M) was added thereto until the solution had a pH of 4, and the amount of residual lithium (LiOH, Li₂CO₃) was calculated from the amount of HCl added and shown in Table 2 below.

Then, 3 g of each of the positive electrode active materials prepared in Examples and Comparative Examples was put into a sample tube, and pre-treated at 150 °C for 2 hours, and then the sample tube was connected to a port of a BET measuring device (Micromeritiecs Tristar2 3000) to measure adsorption amount when nitrogen gas is adsorbed on surfaces of the samples in the section having a relative pressure of 0.01 to 0.2, and surface area per unit weight of the samples was calculated and shown in Table 2 below.

**[Table 2]**

| | LiOH (wt%) | Li₂CO₃ (wt%) | BET specific surface area (m²/g) |
|---|---|---|---|
| Example 1 | 0.425 | 0.275 | 1.4609 |
| Comparative Example 1 | 0.505 | 0.373 | 1.2338 |
| Example 2 | 0.255 | 0.239 | 1.6675 |
| Comparative Example 3 | 0.308 | 0.308 | 1.419 |
| Example 3 | 0.124 | 0.224 | 1.5534 |
| Comparative Example 4 | 0.167 | 0.255 | 1.4511 |
| Example 4 | 0.082 | 0.172 | 1.7257 |
| Comparative Example 5 | 0.131 | 0.229 | 1.5051 |
| Example 5 | 0.164 | 0.322 | 0.3304 |
| Comparative Example 6 | 0.224 | 0.335 | 0.5527 |
| Example 6 | 0.117 | 0.311 | 0.3971 |
| Comparative Example 7 | 0.205 | 0.313 | 0.6207 |
| Comparative Example 2 | 0.159 | 0.152 | 1.4201 |
| Comparative Example 8 | 0.156 | 0.196 | 1.4902 |
| Comparative Example 9 | 0.075 | 0.153 | 1.7281 |

Referring to Table 2, when comparing Example 1 with Comparative Example 1, Example 2 with Comparative Example 3, Example 3 with Comparative Example 4, Example 4 with Comparative Example 5, Example 5 with Comparative Example 6, and Example 6 with Comparative Example 7, in which the total amount of a water-washing solution used is equal, it is seen that residual lithium may be more effectively controlled when steps (B) and (C) are included as in the present invention.

### Experimental Example 2: Evaluation of half-cell characteristics

Lithium secondary batteries were manufactured using the positive electrode active materials prepared in Examples and Comparative Examples, and for each lithium secondary battery, the charging/discharging capacity, capacity retention rate at high temperature, and resistance increase rate were evaluated.

To be specific, each of the positive electrode active materials prepared in Examples and Comparative Examples, a carbon black conductive material, and a PVdF binder were mixed in an NMP solvent in a weight ratio of 97.5:1.0:1.5 to prepare a positive electrode slurry. The positive electrode slurry was applied onto one surface of an aluminum collector, dried at 130 °C, and then roll-pressed to prepare a positive electrode. Meanwhile, an Li metal disk was used as a negative electrode active material. A separator was interposed between the positive electrode and the negative electrode prepared above to manufacture an electrode assembly, and the electrode assembly was placed inside a battery case. Thereafter, an electrolyte was injected into the case to manufacture a lithium secondary battery. In this case, as the electrolyte, an electrolyte prepared by dissolving LiPF₆ (1 M) in an EC/EMC/DMC (3/3/4, vol%) organic solvent was injected to prepare a lithium secondary battery.

The lithium secondary battery prepared as described above was charged up to 4.3 V with a constant current of 0.1 C at 25 °C, and then was discharged up to 3.0 V with a constant current of 0.1 C. Table 3 shows charge capacity, discharge capacity, charging/discharging efficiency, and DCIR.

In addition, the capacity of the lithium secondary battery was measured by repeatedly charging the battery up to 4.3 V with a constant current of 0.33 C in the range of 3.0 V to 4.3 V at 45 °C and then discharging the battery up to 3.0 V with a constant current of 0.33 C over 30 charging/discharging cycles, and in particular, the capacity retention rate was measured as a percentage of capacity at the 30th cycle relative to capacity at the first cycle and is shown in Table 1 below. In addition, at each cycle, resistance at high temperature was measured by measuring a voltage drop for 60 seconds after the start of discharging and dividing the voltage drop by the value of applied current, and in particular, the rate of increase of a resistance value at the 30th cycle relative to a resistance value at the first cycle was calculated and is shown in Table 3.

**[Table 3]**

| | Charge capacity (mAh/g) | Discharge capacity (mAh/g) | Charging/discharging efficiency (%) | DCIR (Ω) | Capacity retention rate (%, 30 cycles) | Resistance increase rate (%, 30 cycles) |
|---|---|---|---|---|---|---|
| Example 1 | 224.8 | 201.8 | 89.8 | 17.21 | 96.9 | 135 |
| Comparative Example 1 | 224.5 | 201.1 | 89.6 | 17.65 | 96.7 | 137 |
| Example 2 | 225.1 | 201.9 | 89.7 | 17.33 | 97.0 | 136 |
| Comparative Example 3 | 223.6 | 200.4 | 89 | 17.33 | 96 | 146 |
| Example 3 | 226.4 | 203.2 | 89.8 | 17.28 | 97.0 | 130 |
| Comparative Example 4 | 225.2 | 200.4 | 89.6 | 17.33 | 96.8 | 135 |
| Example 4 | 225.1 | 202.3 | 89.9 | 17.35 | 97.1 | 131 |
| Comparative Example 5 | 224.2 | 201.3 | 89.8 | 17.89 | 96.9 | 136 |
| Example 5 | 229.4 | 211.3 | 92.1 | 15.03 | 97.6 | 120 |
| Comparative Example 6 | 229.5 | 210 | 91.5 | 17.52 | 97.0 | 140 |
| Example 6 | 229.4 | 210.5 | 91.8 | 15.11 | 97.4 | 122 |
| Comparative Example 7 | 229.2 | 209.9 | 91.6 | 16.92 | 97.2 | 145 |
| Comparative Example 2 | 224.3 | 198.2 | 88.4 | 18.13 | 95.8 | 140 |
| Comparative Example 8 | 223.2 | 196.4 | 88.0 | 17.76 | 95.5 | 150 |
| Comparative Example 9 | 226.2 | 202.3 | 89.3 | 17.3 | 96 | 147 |

Referring to Table 3, when comparing Example 1 with Comparative Example 1, Example 2 with Comparative Example 3, Example 3 with Comparative Example 4, Example 4 with Comparative Example 5, Example 5 with Comparative Example 6, and Example 6 with Comparative Example 7, in which the total amount of a water-washing solution used is equal, it is seen that residual lithium may be more effectively controlled, resulting in excellent charging/discharging efficiency, smaller DCIR value, and particularly excellent cycle characteristics when steps (B) and (C) are included as in the present invention.

In addition, when comparing Examples 3 and 4 with Comparative Examples 8 and 9, in which only the amount of the second water-washing solution is different, it is seen that the charging/discharging efficiency is more excellent and the cycle characteristics are particularly excellent when the amount of the second water-washing solution is 10 parts by weight to 50 parts by weight with respect to 100 parts by weight of the first water-washing solution as in the present invention. Meanwhile, in Comparative Example 8, in which the amount of the second water-washing solution is less than 10 parts by weight with respect to 100 parts by weight of the first water-washing solution, it is seen that the ions on the surface of the positive electrode active material are not sufficiently removed, and thus the charging/discharging efficiency is low, the DCIR value is high, and the cycle characteristics are not satisfactory. In addition, in Comparative Example 9, in which the amount of the second water-washing solution is greater than 50 parts by weight with respect to 100 parts by weight of the first water-washing solution, it is seen that not only the ions on the surface of the positive electrode active material but also the lithium ions present inside are removed, and thus the charging/discharging efficiency is low and the cycle characteristics are not satisfactory.

In addition, in Comparative Example 2, in which step (C) was not included and only step (B) was repeated twice, it is seen that the charging/discharging efficiency is low, the DCIR value is high, and the cycle characteristics are not satisfactory.

### Experimental Example 3: Evaluation of mono-cell volume change

Mono-cells were prepared using the positive electrode active materials prepared in Examples and Comparative Examples, and the volume change rate at high temperature was measured for each.

To be specific, each of the positive electrode active materials prepared in Examples and Comparative Examples, a carbon black conductive material, and a PVdF binder were mixed in an NMP solvent in a weight ratio of 97.5:1.0:1.5 to prepare a positive electrode slurry. The positive electrode slurry was applied onto one surface of an aluminum collector, dried at 130 °C, and then roll-pressed to prepare a positive electrode. A negative electrode slurry prepared by mixing a negative electrode active material in which natural graphite and artificial graphite are mixed in 9:1, a conductive material, an additive, and a binder in a weight ratio of 95.6:1.0:2.3:1.1 in an NMP solvent was applied onto one surface of a copper collector, dried, and then roll-pressed to prepare a negative electrode. An electrode assembly was prepared by interposing a separator between the positive electrode and the negative electrode prepared above, and then laminated at 80 °C to properly adhere the electrode, and aluminum and nickel tabs were welded, and placed in an aluminum pouch, and an electrolyte was injected thereto to prepare mono-cells. In this case, as the electrolyte, an electrolyte prepared by dissolving LiPF₆ (0.7 M) in an EC/EMC (3/7, vol%) organic solvent was used.

The mono-cells prepared as described above were subjected to charge formation with a current of 0.1 C at 25 °C for 3 hours and then one side of the pouch was unsealed and re-sealed through vacuum degassing. Then, the mono-cells were repeatedly charged and discharged three times with a current of 0.33 C, and then charged with a current of 0.33 C. The mono-cells in a charged state were unsealed to separate the negative electrode, and then 3 positive electrodes and 3 separators were alternately stacked and placed in an aluminum pouch, and then an electrolyte was injected thereto to prepare cells for measuring volume. In this case, as the electrolyte, an electrolyte prepared by dissolving LiPF₆ (0.7 M) in an EC/EMC (3/7, vol%) organic solvent was used. The prepared cells were stored in an oven at 60 °C, taken out at one-week intervals to measure volume change rate at room temperature for 12 weeks, and the volume change rate versus the initial volume of each cell is shown in FIG. 1.

Referring to FIG. 1, when comparing Example 1 with Comparative Example 1, Example 2 with Comparative Example 3, Example 3 with Comparative Example 4, Example 4 with Comparative Example 5, Example 5 with Comparative Example 6, and Example 6 with Comparative Example 7, in which the total amount of a water-washing solution used is equal, it is seen that residual lithium may be more effectively controlled, and thus the volume change rate of the cells is smaller at high temperature when steps (B) and (C) are included as in the present invention.

Meanwhile, in Comparative Example 8, in which the amount of the second water-washing solution is less than 10 parts by weight with respect to 100 parts by weight of the first water-washing solution, it is seen that the ions on the surface of the positive electrode active material are not sufficiently removed, and thus the volume change rate of the cells is large at high temperature. In addition, in Comparative Example 9, in which the amount of the second water-washing solution is greater than 50 parts by weight with respect to 100 parts by weight of the first water-washing solution, it is seen that not only the ions on the surface of the positive electrode active material but also the lithium ions present inside are removed, and thus the volume change rate of the cells is large at high temperature.

In addition, in Comparative Example 2, in which step (C) was not included and only step (B) was repeated twice, it is seen that the volume change rate of the cells at high temperature is the largest.

## Claims

1. A method of preparing a positive electrode active material, the method comprising:
(A) preparing a lithium transition metal oxide;
(B) mixing the lithium transition metal oxide with a first water-washing solution to perform a first water-washing and then a first filtering on the lithium transition metal oxide; and
(C) using a filtering device capable of concurrently water-washing and filtering the lithium transition metal oxide subjected to step (B) to concurrently perform a second water-washing and a second filtering, with a second water-washing solution,
wherein the second water-washing solution is in an amount of 10 parts by weight to 50 parts by weight with respect to 100 parts by weight of the first water-washing solution.

2. The method of claim 1, wherein the lithium transition metal oxide contains nickel in an amount of 70 mol% or greater among all metals other than lithium.

3. The method of claim 1, wherein the lithium transition metal oxide has a composition represented by Formula 1 below:
[Formula 1] Li₁₊ₐNiₓ₁Co_{y1}M1_{z1}M2_{w1}O₂
wherein in Formula 1 above,
0≤a≤0.3, 0.7≤x1<1.0, 0<y1≤0.3, 0<z1≤0.3, 0≤w1≤0.2, and x1+y1+z1+w1=1,
M1 is at least one selected from Mn and Al, and
M2 is at least one selected from Zr, B, W, Mo, Cr, Nb, Mg, Hf, Ta, La, Ti, Sr, Ba, Ce, F, P, S, and Y.

4. The method of claim 1, wherein the first water-washing solution is in an amount of 50 parts by weight to 100 parts by weight with respect to 100 parts by weight of the lithium transition metal oxide.

5. The method of claim 1, wherein the second water-washing solution is in an amount of 5 parts by weight to 50 parts by weight with respect to 100 parts by weight of the lithium transition metal oxide.

6. The method of claim 1, wherein the sum of the amount of the first water-washing solution and the amount of the second water-washing solution is 55 parts by weight to 150 parts by weight with respect to 100 parts by weight of the lithium transition metal oxide.

7. The method of claim 1, wherein the first water-washing is performed for 5 to 30 minutes.

8. The method of claim 1, wherein the first water-washing is performed at 5 °C to 30 °C.

9. The method of claim 1, wherein the second water-washing is performed for 5 to 30 minutes.

10. The method of claim 1, wherein the second water-washing is performed at 5 °C to 30 °C.

11. The method of claim 1, wherein (D) drying the lithium transition metal oxide subjected to step (C), and then mixing the dried lithium transition metal oxide with a raw material containing a coating element and heat-treating the mixture to form a coating layer.
